# FASCICULE DE BREVET EUROPEEN

(11) **EP 2 483 057 B1**
(45) Date de publication et mention de la délivrance du brevet: **09.05.2018**
(21) Numéro de dépôt: 10776778.2
(22) Date de dépôt: 01.10.2010
(51) Int. Cl.: B29C 65/60, B29C 65/08, B29C 65/64, B60R 13/04, B60R 13/06

(54) **PROCEDE DE FIXATION D'UNE PIECE RAPPORTEE SUR UN CORDON PROFILE ET VITRAGE OBTENU PAR LE PROCEDE**
VERFAHREN ZUR BEFESTIGUNG EINES ZUSÄTZLICHEN TEILS AN EINE PROFILIERTE EINFASSUNG UND DURCH DIESES VERFAHREN ERHALTENE VERGLASUNG
METHOD FOR FIXING AN ADDITIONAL PART TO A PROFILED RIM AND GLAZING OBTAINED BY SAID METHOD

(30) Priorité: 01.10.2009 FR 0956852
(43) Date de publication de la demande: 08.08.2012
(73) Titulaire: Saint-Gobain Glass France, 92400 Courbevoie (FR)
(72) Inventeur: VERRAT, Adèle, F-60150 Villers-sur-Coudun (FR); FROISSARD, Loïc, F-60200 Compiegne (FR)
(74) Mandataire: Saint-Gobain Recherche
(86) Numéro de dépôt international: PCT/FR2010/052080
(87) Numéro de publication internationale: WO 2011/039490

(56) Documents cités:
- EP-A1- 1 944 182
- DE-A1- 2 836 016
- DE-A1-102006 022 929
- DE-C1- 10 025 359
- JP-A- 10 329 613
- JP-A- 11 058 518
- JP-A- 62 071 623
- JP-A- 2003 118 386
- US-A- 3 367 809
- US-B1- 6 455 809

## Description

La présente invention se rapporte au domaine de la réalisation de cordons profilés sur des vitrages.

Elle concerne plus particulièrement la fixation d'une pièce rapportée en matière plastique, telle qu'un enjoliveur, à la périphérie d'un vitrage.

La présente invention se rapporte ainsi à un procédé de fixation d'une pièce rapportée en matière plastique, telle qu'un enjoliveur, à la périphérie d'un vitrage et en particulier sur une portion d'un cordon profilé fixé à la périphérie du vitrage, ladite pièce rapportée présentant une face arrière comportant des moyens de fixation pour sa fixation audit cordon profilé.

L'art antérieur connaît de la demande internationale de brevet N° WO 2007/003823, un système de clipage de profilé enjoliveur pour cordon profilé utilisant un clip souple pour la fixation d'une pièce rapportée à un vitrage.

Selon ce document, la partie de coopération amont comporte au moins un élément mâle saillant ou un élément femelle creux, cet élément coopérant respectivement avec un élément femelle creux ou un élément mâle saillant correspondant ménagé dans le cordon profilé, ledit élément femelle creux présentant des dimensions intérieures au moins partiellement inférieures aux dimensions extérieures dudit élément mâle saillant.

Cette coopération est ainsi du type « tenon-mortaise » avec un effet de frottement entre une partie au moins des surfaces des éléments.

Un avantage important de ce dispositif réside dans la fiabilité du système de fixation : il permet un maintien fiable du profilé enjoliveur y compris dans des conditions extrêmes notamment de vibrations.

Toutefois, ce système complexifie la conception du cordon profilé et oblige à concevoir un cordon profilé particulier qui présente des zones mâles ou femelles particulières.

En particulier, ce système oblige à positionner le clip avec une grande précision pour que la partie de coopération amont coopère correctement avec la partie correspondante ménagée dans le cordon profilé et un tel positionnement précis est difficilement mécanisable (il ne peut être réalisé que manuellement) ce qui engendre un surcoût lors de la mise en oeuvre.

L'art antérieur connaît en outre de la demande internationale de brevet N° WO 2008/084076 un système de fixation directe d'un enjoliveur sur un cordon profilé, sans pièce intermédiaire, cette fixation étant réalisée par percement du cordon profilé par un appendice située en face arrière de l'enjoliveur et présentant une forme de flèche.

Pour fixer l'enjoliveur sur le cordon profilé, il est alors nécessaire de positionner avec précision l'enjoliveur vis-à-vis du cordon profilé et d'opérer un pressage sur la face extérieure (décoratrice) de l'enjoliveur afin que la flèche traverse le cordon profilé.

Toutefois, comme la matière du cordon profilé assure une fonction d'étanchéité, elle doit présenter une résistance mécanique assez élevée et la force de pressage pour opérer le perçage doit alors être très élevée.

Ce système est complexe à mettre en oeuvre car la force de pressage de l'enjoliveur contre le cordon profilé doit être élevée tout en étant précise pour que la flèche pénètre correctement le cordon, sans se plier sous l'effet de la force de pressage. Il est également très difficilement mécanisable.

En outre, il est difficile à mettre en oeuvre sans prendre le risque d'abimer la face avant (décoratrice) de l'enjoliveur.

L'art antérieur connaît par ailleurs des solutions de soudage de pièce des documents: JP 2003-118386. DE 10 2006022929 et US 6.455.809.

Le but de l'invention est de pallier les inconvénients de l'art antérieur en proposant un système de fixation d'une pièce rapportée, telle qu'un enjoliveur, sur un cordon profilé, qui ne nécessite pas un positionnement extrêmement précis de l'enjoliveur vis-à-vis du cordon profilé lors de la fixation de l'enjoliveur et qui soit mécanisable c'est-à-dire que l'ensemble de l'enjoliveur puisse être fixé en une seule opération industrielle, par un automate unique.

Un but essentiel poursuivi est ainsi de fournir un poste qui permette en une seule opération de fixer la (ou toutes les) pièce(s) rapportée(s) qui doi(ven)t être fixée(s) sur au moins un vitrage, voire sur plusieurs vitrages à la fois.

Cette solution selon l'invention est par ailleurs simple à mettre en oeuvre tout en étant fiable (l'enjoliveur ne peut pas être retiré facilement après sa fixation).

La présente invention se rapporte ainsi dans son acception la plus large à un procédé selon la revendication 1. Il s'agit ainsi d'un procédé de fixation d'une pièce rapportée en matière plastique, telle qu'un enjoliveur, sur une portion d'un cordon profilé fixé à la périphérie du vitrage, ladite pièce rapportée présentant une face arrière comportant des moyens de fixation pour sa fixation audit cordon profilé. Ladite face arrière comporte plusieurs appendices qui pénètrent chacun dans un trou ménagé dans ledit cordon profilé et débouchant à ses deux extrémités sur deux faces opposées dudit cordon profilé (une face avant et une face arrière), l'extrémité distale de chaque appendice (c'est-à-dire l'extrémité de l'appendice qui est à l'opposé de l'extrémité de raccordement à la face arrière) faisant saillie au-delà d'une face arrière respectivement dudit cordon profilé délimitant le trou (et plus précisément une partie au moins du pourtour du trou) et ladite extrémité distale de chaque appendice est déformée par ramollissement temporaire, de préférence par application d'ultrasons, pour venir en contact avec ladite face arrière dudit cordon profilé à la périphérie du trou et de préférence sur toute la périphérie du trou.

La notion de avant/arrière utilisée ici ne fait pas référence à la direction d'avancé d'un véhicule équipé du vitrage selon l'invention mais est à comprendre en référence à la carrosserie du véhicule : une face avant désigne une face orientée vers l'extérieur du véhicule et une face arrière désigne une face orientée vers l'intérieur du véhicule.

Selon l'invention, pendant le ramollissement de l'extrémité distale de l'appendice, l'élément (cordon profilé) situé entre cette extrémité distale et l'extrémité de raccordement de l'appendice à la pièce rapportée se trouve pris et bloclué entre l'extrémité distale ramollie et la face arrière de la pièce rapportée.

Ce ramollissement est tel que l'extrémité distale de l'appendice qui est passée par le trou ménagé préalablement dans l'élément (cordon profilé) engendre une déformation telle que cette extrémité distale ne peut plus repasser par le trous : sa section extérieure devient supérieure à la section intérieure du trou.

Le ramollissement est ensuite, bien sûr, suivi d'un durcissement de la matière de l'appendice après le retrait de la source de ramollissement, et l'extrémité distale est alors figée dans sa forme déformée.

Lorsque la pièce rapportée est fixée directement au cordon profilé, lors de ce ramollissement, la matière plastique dure de la pièce rapportée vient ainsi prendre « en sandwich » la matière plastique souple du cordon profilé entre la face arrière de la pièce rapportée et l'extrémité distale ramollie de l'appendice. Cette action engendre, après durcissement de l'extrémité distale déformé une mise en compression du cordon profilé et diminue le risque de voir apparaître un jeu entre la pièce rapportée et le cordon profilé ; en effet, un tel jeu est préjudiciable car il peut engendrer que la pièce rapportée se mette à trembler sous l'effet de certaines vibrations et cela n'est pas acceptable pour l'esthétique du vitrage et du véhicule comportant le vitrage.

D'une manière générale, il est considéré ici que les matières plastiques souples sont celles qui présentent, après mise en oeuvre, une dureté égale ou inférieure à 110 Shore A (en général dans une plage de 50 à 110 Shore A qui inclue ces valeurs), comme par exemple les TPE, PVC, PU, EPDM, ... ; les matières plastiques dures sont celles qui présentent, après mise en oeuvre, une dureté supérieure à 110 Shore A, ou une dureté comprise dans une plage de 30 à 100 Shore D qui inclue ces valeurs, comme par exemple les PC, ABS, ABS-PC, ...

L'appendice est fixé à ladite face arrière de la pièce rapportée ; il n'est pas mobile par rapport à cette pièce rapportée ; il diminue seulement de longueur et voit la section extérieure de son extrémité distale augmenter au cours du ramollissement. L'appendice est venu de matière avec la pièce rapportée : il a été fabriqué en même temps que la pièce rapportée (par exemple par moulage), ou a été fixé très solidement à la pièce rapportée.

L'appendice présente une forme allongée et présente ainsi deux extrémités selon sa longueur. Il a été fabriqué en même temps que la pièce rapportée, notamment lorsque cette dernière a été fabriquée par moulage, ou a été fixé à la face intérieure de la pièce rapportée, par exemple par soudage ou collage.

Une extrémité, l'extrémité proximale, de l'appendice est ainsi raccordée à la face intérieure de la pièce rapportée. Ce qui est nommé « l'extrémité distale » dans le cadre de l'invention est l'extrémité de l'appendice qui est éloignée de face intérieure de la pièce rapportée et qui n'est pas raccordé à la face intérieure de la pièce rapportée.

L'extrémité distale de l'appendice désigne toute la partie de l'appendice qui fait saillie hors du trou ménagé dans le cordon profilé ou dans le vitrage lui-même et dans lequel l'appendice est en partie caché.

Selon l'invention, chaque appendice de la pièce rapportée se trouve après le ramollissement puis le durcissement, avec des contraintes internes légèrement en traction entre l'extrémité distale bouterollée et la face arrière de la pièce rapportée.

Le ramollissement de l'extrémité distale de l'appendice est, de préférence, opéré par application d'ultrasons dans la gamme de fréquence de 25 à 70 kHz, et de préférence encore, dans la gamme de fréquence de 30 à 35 kHz.

Toutefois, il est également possible que ramollissement de l'extrémité distale de l'appendice soit réalisé par réchauffement par conduction thermique avec une source de chaleur, comme par exemple une tige métallique à une température d'environ 150 à 200 °C.

Dans une variante particulière du procédé, une pression mécanique est appliquée sur ladite extrémité distale au moins pendant une partie du temps de ramollissement, et de préférence pendant toute la durée du ramollissement, voire pendant une durée plus longue (et en particulier la pression peut-être maintenue pendant une durée de 1 à 10 secondes après le retrait de la source de ramollissement ; cette pression mécanique pouvant éventuellement engendrer un aplatissement de l'extrémité distale de l'appendice).

Dans une variante toute particulière du procédé, l'extrémité distale de plusieurs appendices (et de préférence de tous les appendices de la pièce rapportée) sont déformées simultanément par ramollissement temporaire, (de préférence encore par application d'ultrasons), pour venir en contact en même temps avec une face arrière dudit cordon profilé à la périphérie du trou (et de préférence sur toute la périphérie du trou).

La présente invention se rapporte ainsi aussi l'utilisation d'une source de ramollissement d'au moins une source d'ultrasons, voire à l'utilisation de plusieurs sources de ramollissement mise en oeuvre simultanément pour mettre en oeuvre le procédé selon l'invention.

La présente invention se rapporte par ailleurs à un vitrage obtenu par le procédé selon l'invention, comportant une pièce rapportée en matière plastique, telle qu'un enjoliveur, qui est fixée sur une portion d'un cordon profilé qui est lui-même fixé à la périphérie du vitrage, ladite pièce rapportée présentant une face arrière comportant des moyens de fixation pour sa fixation audit cordon profilé. Ladite face arrière de la pièce rapportée comporte plusieurs appendices qui pénètrent chacun dans un trou ménagé dans ledit cordon profilé et débouchant à ses deux extrémités sur deux faces opposées dudit cordon profilé, l'extrémité distale dudit appendice faisant saillie au-delà d'une face arrière dudit cordon profilé délimitant le trou et ladite extrémité distale de chaque appendice a été déformée par ramollissement, de préférence par application d'ultrasons, pour venir en contact avec ladite face arrière dudit cordon profilé à la périphérie du trou et de préférence sur toute la périphérie du trou.

Le fait que l'extrémité distale a été déformée par ramollissement se déduit d'une manière certaine en regardant simplement le vitrage par le fait que l'extrémité distale ainsi déformée ne peut pas pénétrer dans le trou et par le fait qu'aucune trace de déformation uniquement mécanique (comme par exemple un point ou une ligne de pliage) n'est visible ; en outre, la déformation par ramollissement engendre, de préférence, une modification de l'aspect de la surface de l'extrémité distale avec l'apparition de boursouflures et/ou changement de couleur.

La pièce rapportée en matière plastique est fixée de préférence à la périphérie d'un vitrage uniquement par les appendices selon l'invention.

Selon une variante de l'invention, plusieurs trous (et de préférence tous les trous par lesquels passent un appendice) sont orientés selon des axes A, A' parallèles dans l'espace.

Selon une variante de l'invention, plusieurs appendices (et de préférence tous les appendices de la pièce rapportée) sont orientés selon des axes B, B' parallèles dans l'espace. L'élément qui comporte les trous (cordon profilé), s'il est fabriqué par moulage, est alors facile à démouler.

Dans une variante de l'invention, plusieurs appendices (et de préférence tous les appendices de la pièce rapportée) sont orientés chacun selon des axes B, sensiblement perpendiculairement à ladite face arrière de ladite pièce rapportée.

Dans une autre variante de l'invention, ladite pièce rapportée présente une forme non plate avec un angle α entre un axe B d'un appendice et la face arrière de ladite pièce rapportée à l'endroit de l'appendice qui est différent de l'angle α' entre un axe B' d'un autre appendice et la face arrière de ladite pièce rapportée à l'endroit de cet autre appendice.

Selon une variante de l'invention, un (et de préférence chaque) appendice présente une section de préférence creuse et une section extérieure circulaire, ovale, rectangulaire ou carrée et ledit (et de préférence chaque) trou présente une section intérieure de forme respectivement identique à la celle de la section extérieure dudit appendice.

Selon une variante de l'invention, la section intérieure du (et de préférence chaque) trou au moins à son extrémité distale est sensiblement identique (voire légèrement inférieure dans le cas d'un trou dans le cordon profilé) à la section extérieure dudit appendice à proximité de cette extrémité, voire sur une portion de plusieurs millimètres, et de préférence la section intérieure du (et de préférence chaque) trou est sensiblement identique (voire légèrement inférieure dans le cas d'un trou dans le cordon profilé) à la section extérieure dudit appendice sur toute la profondeur dudit trou.

Selon une variante de l'invention, ladite face avant dudit cordon profilé est sensiblement parallèle à ladite face arrière de ladite pièce rapportée, au moins à la périphérie du (et de préférence chaque) trou. Il est alors possible d'appliquer la face arrière de la pièce rapportée contre la face avant du cordon profilé et la partie principale de la pièce rapportée se trouve ainsi appliquée contre, respectivement, le cordon profilé sous l'effet des contraintes internes en traction des appendices.

Selon une variante de l'invention, ladite face arrière dudit cordon profilé à l'endroit du trou est perpendiculaire à l'axe du trou, voire à l'axe de l'appendice.

Selon une variante de l'invention, ladite pièce rapportée présente une forme allongée et de préférence ledit appendice présente une section allongée s'étendant selon la direction allongée de ladite pièce rapportée.

Selon une variante de l'invention, l'extrémité distale du (et de préférence chaque) trou comporte sur au moins une partie de sa périphérie (et de préférence sur toute sa périphérie) un bossage situé en saillie par rapport à la face arrière dudit cordon profilé à la périphérie du trou.

Selon une variante de l'invention, l'extrémité distale du (et de préférence chaque) trou comporte sur au moins une partie de sa périphérie (et de préférence sur toute sa périphérie) un retrait situé en retrait par rapport à la face arrière dudit cordon profilé à la périphérie du trou.

Un avantage important de l'invention réside dans le fait qu'il n'est pas nécessaire de positionner la pièce rapportée vis-à-vis du cordon profilé lui-même (si elle est positionnée directement à travers le vitrage) avec une grande précision ; d'une manière naturelle, la pièce rapportée est guidée vers le cordon profilé au fur-et-à-mesure que les appendices pénètrent dans les trous associés.

Un autre avantage important de l'invention réside dans le fait que la fixation ainsi réalisée est très fiable, tout en étant simple à apérer : elle est facilement reproductible, facilement automatisable (partiellement ou complètement), tout en permettant un maintien fort de la pièce rapportée vis-à-vis du cordon profilé. Il est plus simple de faire pénétrer un appendice dans un trou existant que de chercher à percer la matière du cordon profilé par une flèche, comme proposé dans la demande de brevet N° WO 2008/084076.

En outre, cette fixation s'accommode très bien des vibrations : les vibrations qui parviennent au cordon profilé et au vitrage ne peuvent avoir aucun effet sur la fixation de la pièce rapportée et ne peuvent absolument pas dégrader la liaison entre le cordon profilé et la pièce rapportée.

Par ailleurs, même si la liaison entre le cordon profilé et la pièce rapportée est fiable, elle est facile à détruire pour le recyclage du vitrage : une fois le vitrage décollé de la carrosserie, il est facile de ramollir à nouveau temporairement l'extrémité distale pour retirer la pièce rapportée.

Tous ces avantages sont particulièrement intéressants lorsque la pièce rapportée n'est fixée à la périphérie du vitrage que par les appendices, sans aucun autre moyen mécanique de fixation ni aucun autre moyen chimique (colle) de fixation.

Avantageusement, le système selon l'invention permet de réaliser la fixation d'au moins une pièce intermédiaire sur un cordon profilé, sans que ce cordon profilé ne présente de forme complexe spécifique pour la pièce rapportée qui serait difficile à concevoir et à réaliser (notamment par moulage) en raison de cette spécificité et sans que la présence d'une pièce intermédiaire ne soit nécessaire entre d'une part la pièce rapportée et d'autre part le cordon profilé.

La présente invention sera mieux comprise à la lecture de la description détaillée ci-après d'exemples de réalisation non limitatifs et des figures ci-jointes :
- La figure 1 illustre une vue en perspective d'un vitrage arrière gauche fixe de véhicule présentant un profilé enjoliveur fixé au cordon profilé, le profilé enjoliveur et le cordon profilé étant illustré en coupe en partie avant basse du vitrage ;
- Les figures 2 et 3 illustrent une vue en coupe axiale d'un appendice cylindrique plein respectivement avant et après sa déformation par ramollissement temporaire ;
- La figure 4 illustre une vue en coupe selon le chant bas du vitrage de la figure 1 avant fixation de l'enjoliveur au cordon profilé ;
- La figure 5 illustre une vue en coupe selon le chant bas du vitrage de la figure 1 après fixation de l'enjoliveur au cordon profilé ;
- La figure 6 illustre une vue en perspective d'un vitrage arrière droit fixe de véhicule présentant un profilé enjoliveur fixé au cordon profilé, le vitrage étant coupé en partie avant ;
- La figure 7 illustre les coupes selon les sections S1 et S2 de la figure 6 ;
- La figure 8 illustre une vue de profil des deux sections S1 et S2 juxtaposées de la pièce rapportée de la figure 6 ;
- La figure 9 illustre un autre mode de mise en oeuvre de l'invention ;
- La figure 10 illustre le ramollissement temporaire d'une extrémité distale d'un appendice creux, en cinq étapes ;
- Les figures 11 et 12 illustrent respectivement une vue en coupe et une vue en perspective d'un appendice allongé avant sa déformation par ramollissement temporaire ;
- La figure 13 illustre une vue en perspective de l'appendice des figures 11 et 12 après sa déformation par ramollissement temporaire ;
- La figure 14 illustre une vue en coupe d'un appendice tubulaire avant sa déformation par ramollissement temporaire ;
- Les figures 15 et 16 illustrent deux déformations possibles de l'appendice de la figure 14, respectivement avec application d'une pression mécanique et sans l'application d'une telle pression ; et
- Les figures 17 à 19 illustrent trois variantes de réalisation de l'extrémité distale du trou.

Dans ces figures, les proportions entre les différents éléments sont respectées et les éléments en arrière plan ne sont en général pas représentés, afin de faciliter leur lecture.

La présente invention se rapporte au montage et à la fixation d'une pièce rapportée 2, telle qu'un enjoliveur, à la périphérie d'un vitrage 1, et notamment un vitrage de véhicule.

Selon l'invention, il y a une seule possibilité de fixer la pièce rapportée au vitrage :
la pièce rapportée est fixée indirectement au vitrage 1, par l'intermédiaire d'un cordon profilé 3.

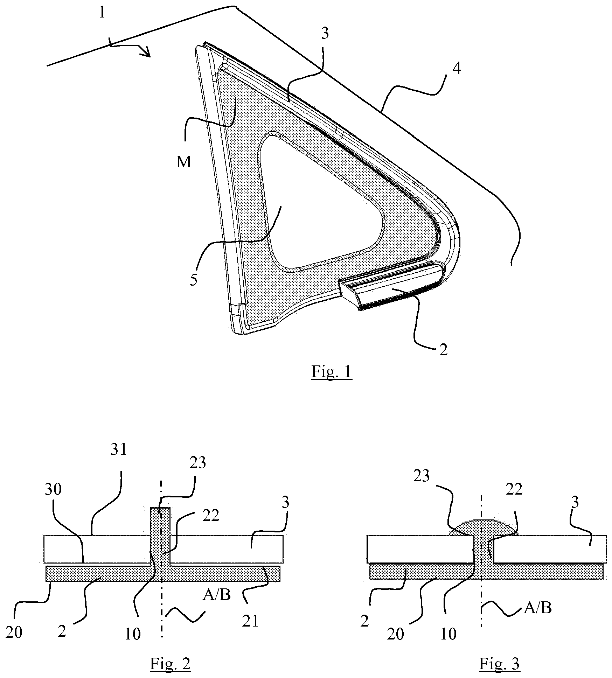

La figure 1 illustre une extrémité arrière d'un véhicule automobile muni d'un vitrage 1 fixé à la carrosserie 4 du véhicule et sur la périphérie duquel un cordon profilé 3 en une matière plastique souple au sens de l'invention a été réalisé.

Le matériau polymère constitutif du cordon profilé 3 peut être un thermoplastique (PVC, TPE, ...), un polyuréthanne ou encore un caoutchouc synthétique du type EPDM ou toute autre matière plastique souple adéquate.

Le cordon profilé 3 a été fabriqué par mise en oeuvre d'un procédé de fabrication appelé « encapsulation » car il comporte une étape de moulage du cordon profilé 3 dans un dispositif de moulage, entre deux éléments de moulage, un élément de moulage accueillant la face intérieure du vitrage et un élément de moulage accueillant la face extérieure du vitrage, ces deux éléments de moulage étant refermés l'un sur l'autre pendant l'étape de moulage.

Sur la figure 1, le cordon profilé 3 est disposé sur toute la périphérie du vitrage 1 mais ce cordon profilé pourrait tout à fait n'être positionné que sur une partie de la périphérie du vitrage ou sur une partie quelconque du vitrage. La face du vitrage qui est visible sur la figure 1 est la face extérieure du vitrage.

Pour améliorer l'aspect esthétique du vitrage, une partie du cordon profilé 3 visible de l'extérieur du véhicule est masquée par un profilé enjoliveur qui est ici disposé seulement en partie basse du vitrage, mais qui pourrait également être disposé sur toute la périphérie du vitrage 1 et/ou sur une partie quelconque du vitrage.

La pièce rapportée 2, qui est utilisée ici comme profilé enjoliveur, est en matière plastique dure au sens de l'invention, et peut-être par exemple à base de acrylonitrile-butadiène-styrène (ABS), acrylonitrile-butadiène-styrène-polycarbonate (ABS-PC), acrylonitrile-butadiène-styrène-polyamide (ABS-PA), polypropylène (PP), acrylonitrile-styrène-acrylate (ASA), polycarbonate (PC), polyamide (PA), ... ou toute autre matière plastique dure adéquate. La pièce rapportée 2 est à base de matière plastique et peut ainsi inclure des charges et notamment des charges minérales, comme des fibres de verre, ou être revêtue d'une (ou de plusieurs) couche(s) et notamment d'une couche décorative sur sa face avant.

La pièce rapportée 2 présente une face avant 20 qui est la face de décoration, vue de l'extérieure ; cette face avant peut être revêtue par exemple d'un revêtement donnant l'aspect d'un métal et en particulier d'un métal chromé.

La pièce rapportée 2 présente par ailleurs une face arrière 21 qui est orientée vers l'intérieur. Cette face arrière comporte des moyens de fixation pour la fixation indirectement au vitrage, par l'intermédiaire du cordon profilé 3.

L'élément vitré 5 du vitrage 1 peut être un élément vitré monolithique, c'est-à-dire constitué d'une feuille de matière unique, ou être un élément vitré composite, c'est-à-dire constitué de plusieurs feuilles de matière entre lesquelles est insérée au moins une couche de matière adhérente dans le cas des vitrages feuilletés, ou au moins un espace intercalaire dans le cas des vitrages multiples (doubles vitrages, triples vitrages, ...). La (ou les) feuille(s) de matière peut (ou peuvent) être minérale(s), notamment en verre, ou organique(s), notamment en matière plastique.

Dans le cas d'un vitrage pour véhicule, le vitrage présente généralement au moins partiellement à sa périphérie une bande d'ornementation M. Cette bande d'ornementation résulte en général d'un dépôt d'émail, réalisé sur la face intérieure du vitrage ou sur une face intercalaire du vitrage pour les vitrages composites, mais elle peut également résulter d'une coloration partielle et/ou périphérique d'une feuille de matière utilisée, notamment d'une feuille en matière organique.

Selon l'invention, pour fixer la pièce rapportée 2 en matière plastique à la périphérie du vitrage 1 d'une part des appendices 22 sont réalisés sur la face arrière 21 de la pièce rapportée et d'autre part des trous 10 sont réalisés préalablement dans le cordon profilé 3 ; pour fixer la pièce rapportée 2, les appendices sont introduits dans les trous 10, puis l'extrémité distale de chaque appendices qui fait saillie hors des trous est déformée par ramollissement temporaire pour venir en contact avec la face arrière 31 du cordon profilé 3 à la périphérie du trou 10 correspondant dans lequel l'appendice est logé.

Pour pouvoir introduire les appendices 22 dans les trous 10, il est nécessaire que chaque trou 10 débouche à ses deux extrémités sur deux faces opposées dudit cordon profilé 3:
le trou 10 débouche à son extrémité proximale 14, la plus proche de la face arrière 21 de la pièce rapportée, sur la face avant 30 du cordon profilé 3 (qui se trouve être la face tournée vers l'extérieur) et à son extrémité distale 13 sur la face arrière 31 du cordon profilé 3 (qui se trouve être la face tournée vers l'intérieur).

Les trous 10 sont opérés préalablement car ils sont présents dans le cordon profilé avant l'introduction de l'appendice dedans ; ils sont de préférence réalisés au moment de la fabrication respectivement du cordon profilé.

Ces trous 10 peuvent présenter une section intérieure 15 circulaire ou oblong. Puisque l'élément dans lequel ils sont fabriqués est en général lui-même fabriqué par moulage, les trous doivent être faciles à démouler. Ces trous 10 présentent par ailleurs un axe A.

Pour pouvoir opérer le bouterollage, c'est-à-dire la déformation par ramollissement temporaire de l'extrémité distale 23 des appendices 22, l'extrémité distale 23 de chaque appendice 22 fait saillie au-delà de la face arrière délimitant le pourtour du trou 10 du cordon profilé 3.

Le bouterollage est opéré par application d'ultrasons dans la gamme de fréquence de 25 à 70 kHz, et de préférence, dans la gamme de fréquence de 30 à 35 kHz.

Les appendices 22 sont en général réalisés venus de matière avec la partie principale de la pièce rapportée, c'est-à-dire que toute la pièce rapporté, avec ses appendices, sont fabriqués ensemble par moulage ; toutefois, il n'est pas exclu que les appendices soit eux-mêmes fabriqués indépendamment de la partie principale de la pièce rapportée et soit eux-mêmes rapportés, par exemple par collage, contre la face arrière 21 de la pièce rapportée.

Le bouterollage est opéré de préférence sur toute la périphérie de chaque trou, c'est-à-dire que l'extrémité distale 23 des appendices 22 est déformée sur tout son pourtour afin que la matière de l'extrémité distale après déformation soit présente sur tout le pourtour de chaque trou 10.

Selon un aspect particulier de l'invention, la pièce rapportée n'est fixée à la périphérie du vitrage que par les appendices bouterollés à leur extrémités distales faisant saille hors des trous du cordon profilé 3.

Dans la suite de la description, il est fait référence à la fixation indirecte de la pièce rapportée au vitrage en disposant les appendices dans des trous 10 ménagés dans le cordon profilé.

Lorsque la pièce rapportée est fabriquée par moulage, la partie principale, située entre la face avant et la face arrière de cette pièce rapportée, ne présente pas nécessairement une épaisseur identique tout son long. Il est ainsi possible que la partie principale soit plus épaisse aux endroits où elle subi des sollicitations plus intenses et plus fines aux endroits moins sollicités.

La section intérieure 15 de chaque trou 10 au moins à son extrémité distale 13 est sensiblement identique (voire légèrement inférieure) à la section extérieure 25 dudit appendice 22 à proximité de cette extrémité distale 13 du trou 10.

Il est possible aussi que sur une portion de plusieurs millimètres (1 à 5 mm), la section intérieure 15 de chaque trou 10 soit sensiblement identique (voire légèrement inférieure) à la section extérieure 25 dudit appendice 22 sur toute la profondeur p dudit trou 10.

L'appendice 22 (et de préférence chaque appendice de la pièce rapportée) peut présenter en coupe transversale par rapport à son axe B une section extérieure 25 qui peut-être circulaire, ovale, rectangulaire ou carrée. Le trou 10 qui accueille cet appendice (et de préférence chaque trou accueillant un appendice comme cela) présente, de préférence une section intérieure 15 respectivement circulaire, ovale, rectangulaire ou carrée, identique à la section extérieure 25 de l'appendice 22.

La figure 2 illustre un appendice 22 simple, à section circulaire pleine, qui s'étend sensiblement perpendiculairement à la face arrière 21 de la pièce rapportée 2 à la périphérie de l'appendice. L'appendice vient d'être positionné dans le trou 10 réalisé préalablement à l'introduction de l'appendice et l'axe B de l'appendice est confondu avec l'axe A du trou 10.

Toutefois, il est possible de réaliser un (ou plusieurs) des appendices de la pièce rapportée tel(s) que après positionnement dans le trou 10 l'axe B de l'appendice ne soit pas confondu avec l'axe A du trou 10 si le trou est de section transversale plus large que la section transversale de l'appendice et à la condition toutefois qu'au moins un appendice de la pièce rapportée soit tel qu'après positionnement dans le trou 10 l'axe B de l'appendice soit confondu avec l'axe A du trou 10. Cette possibilité n'est pas illustrée ici.

La figure 3 illustre l'extrémité distale 23 de l'appendice 22 après bouterollage. La matière ramollie ayant été contenue par un contre-moule semi-sphérique, l'extrémité distale 23 bouterollée présente en forme semi-sphérique (demi-sphère ou moins qu'une demi-sphère).

Comme visible en comparant les figures 2 et 3, la formation de la bouterolle a eu pour effet de rapprocher la face arrière 21 de la pièce rapportée 2 contre la face avant 30 du cordon profilé 3. L'appendice 22 se trouve de ce fait avec des contraintes internes légèrement en traction entre l'extrémité distale 23 bouterollée et la face arrière 21 et le cordon profilé 3 se trouve de ce fait avec des contraintes internes légèrement en compression entre sa face extérieure 30 en contact avec la face arrière 21 et sa face intérieure 31 en contact avec l'extrémité distale 23 bouterollée.

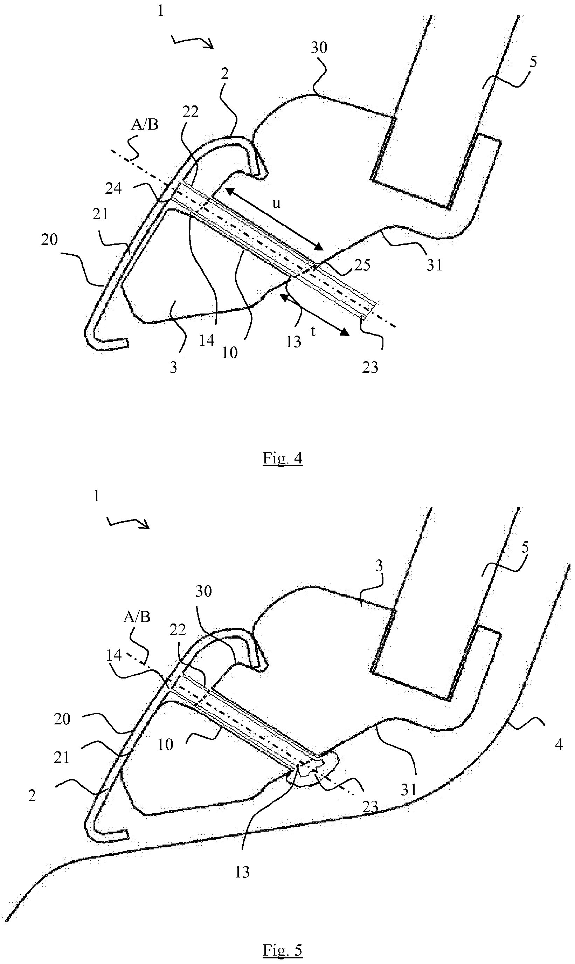

La pièce rapportée 2 est fixé au vitrage avant la fixation du vitrage dans la baie de carrosserie. La carrosserie 4 est illustrée en figure 5 pour montrer que l'extrémité distale 23 ne gêne pas la fixation du vitrage dans la baie de carrosserie.

Dans la version illustrée à la figure 4, la longueur t de l'extrémité distale 23 avant bouterollage est de l'ordre de 4 mm et la profondeur u dudit trou 10, de son extrémité proximale à son extrémité distale, est au minium de 2 mm (ici de 6 mm).

Pour pouvoir introduire tous les appendices de la pièce rapportée dans les trous correspondant, les trous 10 sont coaxiaux : ils présentent tous un axe et tous les axes des trous 10 sont parallèles dans l'espace.

Ceci est relativement facile pour cette variante des figures 4 et 5 car les appendices 22 sont orientés chacun selon un axe B, sensiblement perpendiculairement à la face arrière 21 de la pièce rapportée 2.

La situation peut être plus complexe lorsque les axes A des trous ne sont pas perpendiculaires à la face arrière 21 de la pièce rapportée 2 et présentent tous le même angle par rapport à la face arrière 21 de la pièce rapportée 2.

La situation peut être encore plus complexe lorsque les axes A des trous ne présentent pas tous le même angle par rapport à la face arrière 21 de la pièce rapportée 2.

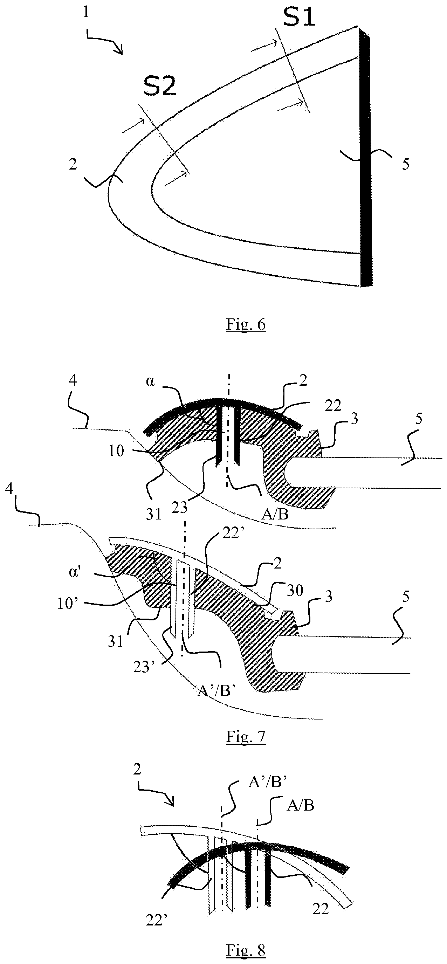

Ceci est particulièrement visible en lien avec la variante de l'invention illustrée aux figures 6 à 8.

Dans cette variante de l'invention, la pièce rapportée est de forme complexe, non plate : la pièce rapportée 2 présente un angle α entre un axe B d'un appendice 22 et la face arrière 21 de ladite pièce rapportée 2 à l'endroit de l'appendice 22 qui est différent de l'angle α' entre un axe B' d'un autre appendice 22' et la face arrière 21 de ladite pièce rapportée 2 à l'endroit de cet autre appendice 22'.

Sur la figure 7, la bouterolle n'est pas encore formée.

Lors de la mise en oeuvre de cette variante, quelle que soit l'orientation dans l'espace des axes A, A' des trous 10, 10' par rapport à la face arrière 21 de la pièce rapportée 2, la direction d'introduction des appendices 22 dans les trous 10 est la direction des axes A, A', qui sont parallèles dans l'espace ; Les axes B, B', sont également parallèles dans l'espace et sont confondus avec les axes des trous après introduction des appendices dans les trous.

Dans ce cas, la direction d'application de la source de ramollissement est, de préférence, la direction des axes A.

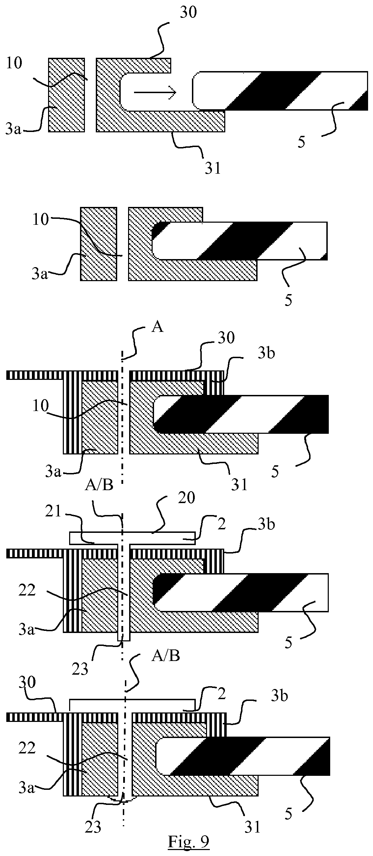

Dans la variante illustrée en figure 9, le cordon profilé 3 est en deux partie qui ne sont pas fabriquées simultanément.

Une première partie 3a du cordon profilé 3 n'est pas fabriquée par encapsulation sur le vitrage mais est préfabriquée et présente un creux qui accueille le chant du vitrage (figure du haut) ; ainsi tout le pourtour du vitrage est inséré dans le creux du cordon profilé (2^{e} figure en partant du haut).

Cette première partie 3a comporte une partie des trous 10, dont un seul est représenté ici.

Il serait possible de positionner la pièce rapportée afin que les appendices pénètrent dans les trous, puis de ramollir temporairement les extrémités distales des appendices pour former les bouts.

Toutefois, ici, une seconde partie 3b du cordon profilé 3 est positionnée contre la face extérieure de la première partie 3a du cordon profilé afin d'augmenter la distance entre la face intérieure 31 du cordon profilé complet (constitué de la première partie 3a et la seconde partie 3b) et sa face extérieure 30 (3^{e} dessin en partant du haut).

Cette seconde partie 3b peut en outre permettre de réaliser une base contre laquelle la pièce rapportée peut venir en appui. Elle présente également des trous pour le passage des appendices. Elle peut être en matière plus souple encore que la première partie 3a.

Il est ainsi possible d'associer deux matières à propriétés différentes en fonction des souhaits, d'une part pour la première partie 3a du cordon profilé 3 en matière plastique souple et d'autre part pour la seconde partie 3b du cordon profilé 3 en matière plastique souple.

Ensuite, (4^{e} dessins en partant du haut) la pièce rapportée est positionnée sur la seconde partie 3b afin que les appendices pénètrent dans les trous, puis les extrémités distales des appendices sont ramollies temporairement pour former les bouterolles (5^{e} dessins en partant du haut).

Dans cette configuration, comme visible sur les dessins de la figure 9, l'appendice 22 est plein et s'étend sensiblement perpendiculairement à la face arrière 21 de ladite pièce rapportée 2.

Dans cette configuration en outre, comme visible sur les dessins de la figure 9, la face arrière 31 du cordon profilé (mais cela pourrait être aussi la face arrière du vitrage lui-même) est sensiblement parallèle à la face arrière 21 de ladite pièce rapportée 2, au moins à la périphérie du trou 10 (et de préférence est sensiblement parallèle à la face arrière 21 à la périphérie de chaque trou).

Dans cette variante de la figure 9, il est possible que la première partie 3a soit fabriquée par encapsulation et que la seconde partie 3b soit elle aussi fabriquée postérieurement par encapsulation.

Dans cette configuration aussi le cordon profilé est mis en compression entre la face arrière de la pièce rapportée et l'extrémité distale ramollie de l'appendice.

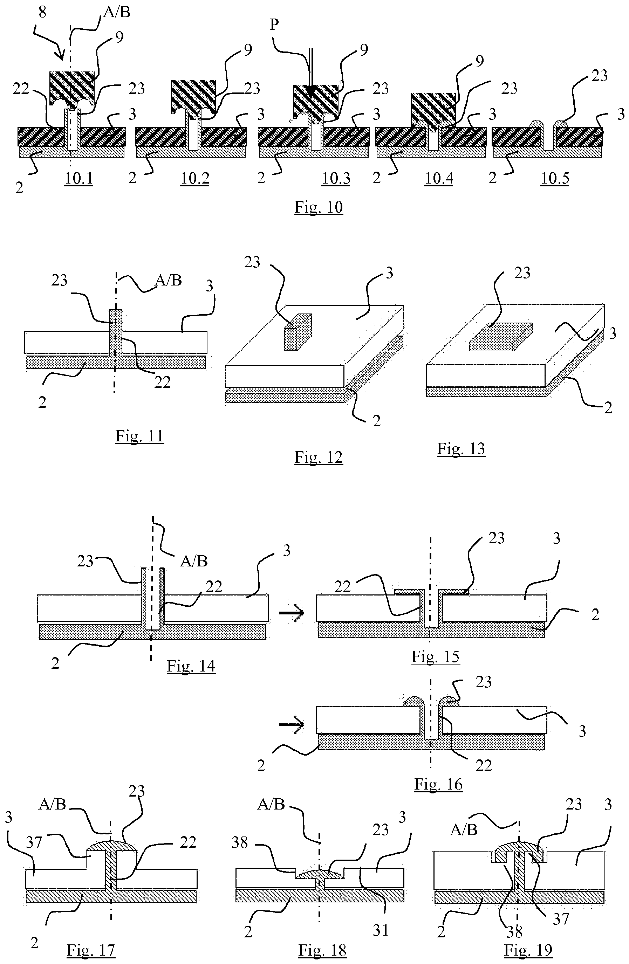

La figure 10 illustre un dispositif 8 pour la mise en oeuvre du procédé selon invention et sa mise en oeuvre.

Ce dispositif comporte une source de ramollissement 9 qui est une source d'ultrasons, unique pour tous les appendices. La fréquence de fonctionnement de la source est de 35 kHz et la puissance du générateur de 400 W.

La pièce rapportée est ici en ABS-PC d'une dureté de 80 Shore D. L'appendice 22 est tubulaire, de section constante sur toute sa longueur, avec un diamètre externe de 6 mm et une paroi de 1 mm d'épaisseur. L'extrémité distale présente une longueur de 4 mm avant ramollissement. La matière plastique du cordon profilé est en polyuréthane d'une dureté Shore A de 60.

Le dessin 10.1 illustre l'approche de la source d'ultrason de l'extrémité distale 23.

Le dessin 10.2 illustre la mise en contact de la source d'ultrason avec l'extrémité distale 23.

Le dessin 10.3 illustre le début du ramollissement temporaire de l'extrémité distale 23 sous l'effet des ultrasons.

Le dessin 10.4 illustre la fin du ramollissement temporaire de l'extrémité distale 23 sous l'effet des ultrasons.

Le dessin 10.5 illustre l'extrémité distale 23 après le bouterollage, c'est-à-dire après le ramollissement temporaire et le durcissement de la matière de l'extrémité distale. La déformation de l'extrémité distale 23 est définitive après retrait de la source de ramollissement 9.

Ces dessins montrent par ailleurs que dans le cas illustré, la matière ramollie a été contenue par un contre-moule en métal ; ce contre-moule a engendré une extrémité distale 23 bouterollée en forme de demi-sphère avec un trou circulaire en son centre. Ce contre-moule a été appliqué pendant une durée de 4 à 5 secondes contre l'extrémité distale pour obtenir le ramollissement visible sur le dessin 10.5.

Dans une autre version de l'invention, le dispositif 8 comporte plusieurs sources de ramollissement qui sont mises en oeuvre simultanément pour bouteroller toutes les extrémités distales d'une pièce rapportée en même temps.

La direction d'application P de la source de ramollissement est, de préférence, la direction de l'axe B de l'appendice pour chaque appendice.

Les figures 11 et 12 illustrent une variante selon laquelle ladite pièce rapportée 2 présente une forme allongée et un appendice 22 présente aussi une section allongée qui s'étend selon la direction allongée de ladite pièce rapportée. De préférence dans ce cas, tous les appendices de la pièce rapportée présentent une section allongée qui s'étend selon la direction allongée de ladite pièce rapportée.

Dans cette variante, l'extrémité distale 23 de l'appendice 22 est ainsi bouterollée selon la direction allongée.

La figure 13 illustre l'extrémité distale 23 de l'appendice 22 qui présente une section carrée après bouterollage.

La figure 14 illustre une variante selon laquelle l'appendice 22 (et de préférence chaque appendice de la pièce rapportée) présente une section creuse.

Dans cette variante, la section extérieure 25 de l'appendice peut-être circulaire, ovale, rectangulaire ou carrée. Le trou 10 qui accueille cet appendice (et de préférence chaque trou accueillant un appendice comme cela) présente une section intérieure 15 respectivement similaire à la section extérieure 25 de l'appendice 22.

La figure 15 illustre une première variante de réalisation l'extrémité distale 23 bouterollée : une pression mécanique a été appliquée sur ladite extrémité distale 23 au moins pendant une partie du temps de ramollissement, (et ici pendant toute la durée du ramollissement) ; cette pression mécanique a engendré un aplatissement de l'extrémité distale 23 bouterollée.

La figure 16 illustre une seconde variante de réalisation l'extrémité distale 23 bouterollée de la figure 14 : aucune pression mécanique n'a été appliquée sur ladite extrémité distale 23 pendant une partie du temps de ramollissement ; la matière ramollie a par contre été contenue par un contre-moule, comme dans le cas de la figure 2 ; ce contre-moule a engendré une extrémité distale 23 bouterollée en forme de demi-sphère avec un trou circulaire en son centre.

La figure 17 illustre une variante selon laquelle l'extrémité distale 13 d'un trou 10 (et de préférence de chaque trou 10 du cordon profilé) comporte sur au moins une partie de sa périphérie (et de préférence sur toute sa périphérie) un bossage 37 situé en saillie par rapport à la face arrière dudit cordon profilé à la périphérie du trou 10. Ce bossage peut par exemple présenter une épaisseur qui est comprise entre environ un cinquième et une fois l'épaisseur du cordon profilé à la périphérie du trou 10.

Dans cette variante, l'extrémité distale 23 de l'appendice 22 est ainsi bouterollée contre une surépaisseur du cordon profilé, ce qui permet de diminuer le risque de rupture du cordon profilé à proximité du trou 10.

La figure 18 illustre une variante selon laquelle l'extrémité distale 13 d'un trou 10 (et de préférence de chaque trou 10 du cordon profilé) comporte sur au moins une partie de sa périphérie (et de préférence sur toute sa périphérie) un retrait 38 situé en retrait par rapport à la face arrière 31 dudit cordon profilé à la périphérie du trou 10. Ce retrait peut par exemple présenter une épaisseur qui est comprise entre environ la moitié et un cinquième de l'épaisseur du cordon profilé à la périphérie du trou 10.

Dans cette variante, l'extrémité distale 23 de l'appendice 22 est ainsi bouterollée dans un creux et ne dépasse pas ou très peu de la face arrière du cordon profilé à la périphérie du trou 10. Cela limite ainsi l'encombrement de l'extrémité distale qui fait saillie hors du trou 10.

La figure 19 illustre une variante qui est la combinaison des deux précédentes variantes : l'extrémité distale 13 d'un trou 10 (et de préférence de chaque trou 10 du cordon profilé) comporte sur au moins une partie de sa périphérie (et de préférence sur toute sa périphérie) à la fois un bossage 37 et un retrait 38. Ce bossage et ce retrait peuvent présenter la même épaisseur. Ce bossage et ce retrait sont de préférence coaxiaux, le bossage étant plus proche de l'axe A du trou que le retrait.

Dans cette variante, l'extrémité distale 23 de l'appendice 22 présente en coupe longitudinale (selon l'axe B) une forme de champignon. L'extrémité distale 23 de l'appendice 22 est ainsi bouterollée contre une surépaisseur du cordon profilé tout en étant en partie en creux par rapport à la face arrière du cordon profilé. La fixation est ainsi forte, comme dans le cas de la variante de la figure 17, tout en limitant l'encombrement comme dans le cas de la variante de la figure 18.

La présente invention est décrite dans ce qui précède à titre d'exemple. Il est entendu que l'homme du métier est à même de réaliser différentes variantes de l'invention sans pour autant sortir du cadre du brevet tel que défini par les revendications.

## Revendications

1. Procédé de fixation d'une pièce rapportée (2) en matière plastique, telle qu'un enjoliveur, sur une portion d'un cordon profilé (3) fixé à la périphérie d'un vitrage (1), ladite pièce rapportée (2) présentant une face arrière (21) comportant des moyens de fixation pour sa fixation audit cordon profilé (3), **caractérisé en ce que** ladite face arrière (21) comporte plusieurs appendices (22, 22') qui pénètrent chacun dans un trou (10, 10') ménagé dans ledit cordon profilé (3) et débouchant à ses deux extrémités sur deux faces opposées dudit cordon profilé (3), l'extrémité distale (23, 23') de chaque appendice faisant saillie au-delà d'une face arrière (31) dudit cordon profilé délimitant le trou (10, 10') **et en ce que** ladite extrémité distale (23, 23') de chaque appendice est déformée par ramollissement temporaire, de préférence par application d'ultrasons, pour venir en contact avec ladite face arrière (31) dudit cordon profilé à la périphérie du trou (10, 10') et de préférence sur toute la périphérie du trou(10, 10') de telle sorte que ledit ramollissement est opéré par application d'ultrasons dans la gamme de fréquence de 25 à 70 kHz, et de préférence, dans la gamme de fréquence de 30 à 35 kHz.

2. Procédé de fixation selon la revendication 1, **caractérisé en ce qu'**une pression mécanique est appliquée sur ladite extrémité distale (23, 23') au moins pendant une partie du temps de ramollissement, et de préférence pendant toute la durée du ramollissement, voire pendant une durée plus longue.

3. Procédé de fixation selon l'une quelconque des revendications 1 à 2, **caractérisé en ce que** l'extrémité distale (23, 23') de plusieurs appendices (22, 22') sont déformées simultanément par ramollissement temporaire, pour venir en contact en même temps avec une face arrière (31) dudit cordon profilé à la périphérie du trou (10, 10').

4. Vitrage (1) obtenu par le procédé selon l'une quelconque des revendications 1 à 3, comportant une pièce rapportée (2) en matière plastique, telle qu'un enjoliveur, qui est fixée sur une portion d'un cordon profilé (3) qui est lui-même fixé à la périphérie du vitrage (1), ladite pièce rapportée (2) présentant une face arrière (21) comportant des moyens de fixation pour sa fixation audit cordon profilé (3), **caractérisé en ce que** ladite face arrière (21) comporte plusieurs appendices (22, 22') qui pénètrent chacun dans un trou (10) ménagé dans ledit cordon profilé (3) et débouchant à ses deux extrémités sur deux faces opposées dudit cordon profilé (3), l'extrémité distale (23, 23') dudit appendice faisant saillie au-delà d'une face arrière (31) dudit cordon profilé délimitant le trou (10) **et en ce que** ladite extrémité distale (23, 23') de chaque appendice a été déformée par ramollissement, par application d'ultrasons, pour venir en contact avec ladite face arrière (31) dudit cordon profilé à la périphérie du trou (10) et de préférence sur toute la périphérie du trou (10).

5. Vitage (1) selon la revendication 4, **caractérisé en ce que** plusieurs trous (10) sont orientés selon des axes A parallèles dans l'espace.

6. Vitrage (1) selon la revendication 4 ou 5, **caractérisé en ce que** plusieurs appendices (22, 22') sont orientés selon des axes B, B' parallèles dans l'espace.

7. Vitrage (1) selon l'une quelconque des revendications 4 à 6, **caractérisé en ce que** plusieurs appendices (22, 22') sont orientés chacun selon des axes B, sensiblement perpendiculairement à ladite face arrière (21) de ladite pièce rapportée (2).

8. Vitrage (1) selon l'une quelconque des revendications 4 à 6, **caractérisé en ce que** ladite pièce rapportée (2) présente une forme non plate avec un angle α entre un axe B d'un appendice (21) et la face arrière (21) de ladite pièce rapportée (2) à l'endroit de l'appendice qui est différent de l'angle α' entre un axe B' d'un autre appendice (21') et la face arrière (21) de ladite pièce rapportée (2) à l'endroit de cet autre appendice (21').

9. Vitrage (1) selon l'une quelconque des revendications 4 à 6, **caractérisé en ce que** un appendice (22) présente une section de préférence creuse et une section extérieure (25) circulaire, ovale, rectangulaire ou carrée et **en ce que** ledit trou (10) présente une section intérieure (15) de forme respectivement identique à la celle de la section extérieure (25) dudit appendice (22).

10. Vitrage (1) selon l'une quelconque des revendications 4 à 9, **caractérisé en ce que** la section intérieure (15) du trou (10) au moins à son extrémité distale (13) est sensiblement identique à la section extérieure (25) dudit appendice (22) à proximité de cette extrémité, voire sur une portion de plusieurs millimètres, et de préférence la section intérieure (15) du trou (10) est sensiblement identique à la section extérieure (25) dudit appendice (22) sur toute la profondeur p dudit trou (10).

11. Vitrage (1) selon l'une quelconque des revendications 4 à 10, **caractérisé en ce que** ladite face avant (30) dudit cordon profilé est sensiblement parallèle à ladite face arrière (21) de ladite pièce rapportée (2), au moins à la périphérie du trou (10).

12. Vitrage (1) selon l'une quelconque des revendications 4 à 11, **caractérisé en ce que** ladite face arrière (31) dudit cordon profilé à l'endroit du trou (10) est perpendiculaire à l'axe du trou, voire à l'axe de l'appendice.

13. Vitrage (1) selon l'une quelconque des revendications 4 à 12, **caractérisé en ce que** ladite pièce rapportée (2) présente une forme allongée et de préférence ledit appendice (22) présente une section allongée s'étendant selon la direction allongée de ladite pièce rapportée.

14. Vitrage (1) selon l'une quelconque des revendications 4 à 13, **caractérisé en ce que** l'extrémité distale (13) du trou (10) comporte sur au moins une partie de sa périphérie un bossage (37) situé en saillie par rapport à la face arrière (31) dudit vitrage ou dudit cordon profilé à la périphérie du trou (10).

15. Vitrage (1) selon l'une quelconque des revendications 4 à 14, **caractérisé en ce que** l'extrémité distale (13) du trou (10) comporte sur au moins une partie de sa périphérie un retrait (38) situé en retrait par rapport à la face arrière (31) dudit vitrage ou dudit cordon profilé à la périphérie du trou (10).

## Patentansprüche

1. Verfahren zur Befestigung eines zusätzlichen Teils (2) aus Kunststoff wie eine Verzierung auf einem Abschnitt einer profilierten Einfassung (3), die auf dem Umfang einer Verglasung (1) befestigt ist, wobei das zusätzliche Teil (2) eine Rückseite (21) aufweist, die Befestigungsmittel für seine Befestigung an der profilierten Einfassung (3) aufweist, **dadurch gekennzeichnet, dass** die Rückseite (21) mehrere Fortsätze (22, 22') aufweist, die jeweils in ein Loch (10, 10') eindringen, das in der profilierten Einfassung (3) ausgebildet ist und an seinen beiden Enden auf zwei gegenüberliegenden Seiten der profilierten Einfassung (3) ausmündet, wobei das distale Ende (23, 23') jedes Fortsatzes über eine Rückseite (31) der profilierten Einfassung, die das Loch (10, 10') begrenzt, hinausragt, **und dass** das distale Ende (23, 23') jedes Fortsatzes durch zeitweiliges Erweichen, vorzugsweise durch Anwendung von Ultraschall, verformt wird, um mit der Rückseite (31) der profilierten Einfassung am Umfang des Lochs (10, 10') und vorzugsweise über den gesamten Umfang des Lochs (10, 10') in Kontakt zu kommen, so **dass** das Erweichen durch Anwendung von Ultraschall im Frequenzbereich von 25 bis 70 kHz und vorzugsweise im Frequenzbereich von 30 bis 35 kHz erfolgt.

2. Befestigungsverfahren nach Anspruch 1, **dadurch gekennzeichnet, dass** ein mechanischer Druck auf das distale Ende (23, 23') mindestens während eines Teils der Erweichungszeit und vorzugsweise während der gesamten Dauer des Erweichens, ja sogar während einer längeren Dauer, angewendet wird.

3. Befestigungsverfahren nach einem der Ansprüche 1 bis 2, **dadurch gekennzeichnet, dass** das distale Ende (23, 23') von mehreren Fortsätzen (22, 22') gleichzeitig durch zeitweiliges Erweichen verformt wird, um gleichzeitig mit einer Rückseite (31) der profilierten Einfassung am Umfang des Lochs (10, 10') in Kontakt zu kommen.

4. Verglasung (1), erhalten nach dem Verfahren nach einem der Ansprüche 1 bis 3, aufweisend ein zusätzliches Teil (2) aus Kunststoff wie eine Verzierung, die auf einem Abschnitt einer profilierten Einfassung (3) befestigt ist, die selbst auf dem Umfang der Verglasung (1) befestigt ist, wobei das zusätzliche Teil (2) eine Rückseite (21) aufweist, die Befestigungsmittel für seine Befestigung an der profilierten Einfassung (3) aufweist, **dadurch gekennzeichnet, dass** die Rückseite (21) mehrere Fortsätze (22, 22') aufweist, die jeweils in ein Loch (10) eindringen, das in der profilierten Einfassung (3) ausgebildet ist und an seinen beiden Enden auf zwei gegenüberliegenden Seiten der profilierten Einfassung (3) ausmündet, wobei das distale Ende (23, 23') des Fortsatzes über eine Rückseite (31) der profilierten Einfassung, die das Loch (10) begrenzt, hinausragt, **und dass** das distale Ende (23, 23') jedes Fortsatzes durch Erweichen durch Anwendung von Ultraschall verformt wurde, um mit der Rückseite (31) der profilierten Einfassung am Umfang des Lochs (10) und vorzugsweise über den gesamten Umfang des Lochs (10) in Kontakt zu kommen.

5. Verglasung (1) nach Anspruch 4, **dadurch gekennzeichnet, dass** mehrere Löcher (10) gemäß im Raum parallelen Achsen A ausgerichtet sind.

6. Verglasung (1) nach Anspruch 4 oder 5, **dadurch gekennzeichnet, dass** mehrere Fortsätze (22, 22') gemäß im Raum parallelen Achsen B, B' ausgerichtet sind.

7. Verglasung (1) nach einem der Ansprüche 4 bis 6, **dadurch gekennzeichnet, dass** jeweils mehrere Fortsätze (22, 22') gemäß zur Rückseite (21) des zusätzlichen Teils (2) etwa senkrechten Achsen B ausgerichtet sind.

8. Verglasung (1) nach einem der Ansprüche 4 bis 6, **dadurch gekennzeichnet, dass** das zusätzliche Teil (2) eine nicht flache Form mit einem Winkel α zwischen einer Achse B eines Fortsatzes (21) und der Rückseite (21) des zusätzlichen Teils (2) an der Stelle des Fortsatzes aufweist, der sich vom Winkel α' zwischen einer Achse B' eines anderen Fortsatzes (21') und der Rückseite (21) des zusätzlichen Teils (2) an der Stelle dieses anderen Fortsatzes (21') unterscheidet.

9. Verglasung (1) nach einem der Ansprüche 4 bis 6, **dadurch gekennzeichnet, dass** ein Fortsatz (22) einen vorzugsweise hohlen Querschnitt und einen kreisrunden, ovalen, rechteckigen oder quadratischen äußeren Querschnitt (25) aufweist, und **dass** das Loch (10) einen inneren Querschnitt (15) einer Form aufweist, die jeweils mit derjenigen des äußeren Querschnitts (25) des Fortsatzes (22) identisch ist.

10. Verglasung (1) nach einem der Ansprüche 4 bis 9, **dadurch gekennzeichnet, dass** der innere Querschnitt (15) des Lochs (10) mindestens an seinem distalen Ende (13) mit dem äußeren Querschnitt (25) des Fortsatzes (22) in der Nähe dieses Endes, ja sogar über einen Abschnitt von mehreren Millimetern, etwa identisch ist, und vorzugsweise der innere Querschnitt (15) des Lochs (10) mit dem äußeren Querschnitt (25) des Fortsatzes (22) über die gesamte Tiefe p des Lochs (10) etwa identisch ist.

11. Verglasung (1) nach einem der Ansprüche 4 bis 10, **dadurch gekennzeichnet, dass** die Vorderseite (30) der profilierten Einfassung mindestens am Umfang des Lochs (10) etwa parallel zur Rückseite (21) des zusätzlichen Teils (2) ist.

12. Verglasung (1) nach einem der Ansprüche 4 bis 11, **dadurch gekennzeichnet, dass** die Rückseite (31) der profilierten Einfassung an der Stelle des Lochs (10) senkrecht zur Achse des Lochs, ja sogar zur Achse des Fortsatzes, ist.

13. Verglasung (1) nach einem der Ansprüche 4 bis 12, **dadurch gekennzeichnet, dass** das zusätzliche Teil (2) eine längliche Form aufweist und vorzugsweise der Fortsatz (22) einen länglichen Querschnitt aufweist, der sich gemäß der länglichen Richtung des zusätzlichen Teils erstreckt.

14. Verglasung (1) nach einem der Ansprüche 4 bis 13, **dadurch gekennzeichnet, dass** das distale Ende (13) des Lochs (10) über mindestens einen Teil seines Umfangs einen Vorsprung (37) aufweist, der in Bezug zur Rückseite (31) der Verglasung oder der profilierten Einfassung am Umfang des Lochs (10) hervorsteht.

15. Verglasung (1) nach einem der Ansprüche 4 bis 14, **dadurch gekennzeichnet, dass** das distale Ende (13) des Lochs (10) über mindestens einen Teil seines Umfangs einen Rücksprung (38) aufweist, der in Bezug zur Rückseite (31) der Verglasung oder der profilierten Einfassung am Umfang des Lochs (10) zurückspringt.

## Claims

1. A method for fixing an attached component (2) made of plastic, such as a trim to a portion of a molding (3) fixed to the periphery of a glazing (1), said attached component (2) having a rear face (21) comprising fixing means for fixing it to said molding (3), **characterized in that** said rear face (21) comprises several appendages (22, 22') each of which enters a hole (10, 10') created in said molding (3) and which is open at its two ends onto two opposite faces of said molding (3), the distal end (23, 23') of each appendage projecting beyond a rear face (31) of said molding delimiting the hole (10, 10') **and in that** said distal end (23, 23') of each appendage is deformed by temporary softening, preferably through the application of ultrasound, to come into contact with said rear face (31) of said molding at the periphery of the hole (10, 10') and preferably around the entire periphery of the hole (10, 10'), such that said softening is performed by applying ultrasound in the frequency range from 25 to 70 kHz, and preferably in the frequency range from 30 to 35 kHz.

2. The method of fixing as claimed in claim 1, **characterized in that** mechanical pressure is applied to said distal end (23, 23'), at least during part of the softening time, and preferably throughout the softening time, or even for a longer period.

3. The method of fixing as claimed in claim 1 or 2, **characterized in that** the distal end (23, 23') of several appendages (22, 22') are deformed simultaneously by temporary softening, to come into contact at the same time with a rear face (31) of said molding at the periphery of the hole (10, 10').

4. A glazing (1) obtained by the method as claimed in any one of claims 1 to 3, comprising an attached component (2) made of plastic, such as a trim, which is fixed to a portion of a molding (3) which is itself fixed to the periphery of the glazing (1), said attached component (2) having a rear face (21) comprising fixing means for fixing it to said molding (3), **characterized in that** said rear face (21) comprises several appendages (22, 22') each of which enters a hole (10) created in said molding (3) and which is open at its two ends onto two opposite faces of said molding (3), the distal end (23, 23') of said appendage projecting beyond a rear face (31) of said molding delimiting the hole (10) **and in that** said distal end (23, 23') of each appendage has been deformed by softening, through the application of ultrasound, to come into contact with said rear face (31) of said molding at the periphery of the hole (10) and preferably around the entire periphery of the hole (10).

5. The glazing (1) as claimed in claim 4, **characterized in that** several holes (10) are oriented along axes A that are parallel in space.

6. The glazing (1) as claimed in claim 4 or 5, **characterized in that** several appendages (22, 22') are oriented along axes B, B' that are parallel in space.

7. The glazing (1) as claimed in any one of claims 4 to 6, **characterized in that** several appendages (22, 22') are each oriented along axes B that are substantially perpendicular to said rear face (21) of said attached component (2).

8. The glazing (1) as claimed in any one of claims 4 to 6, **characterized in that** said attached component (2) has a non-flat shape with an angle α between an axis B of an appendage (21) and the rear face (21) of said attached component (2) at the point on the appendage that differs from the angle α' between an axis B' of another appendage (21') and the rear face (21) of said attached component (2) at the location of this other appendage (21').

9. The glazing (1) as claimed in any one of claims 4 to 8, **characterized in that** one appendage (22) has a preferably hollow cross section and a circular, oval, rectangular or square exterior section (25) **and in that** said hole (10) has an interior section (15) of a shape respectively identical to that of the exterior section (25) of said appendage (22).

10. The glazing (1) as claimed in any one of claims 4 to 9, **characterized in that** the interior section (15) of the hole (10) at least at its distal end (13) is substantially identical to the exterior section (25) of said appendage (22) near this end, or even over a portion measuring several millimeters, and for preference the interior section (15) of the hole (10) is substantially identical to the exterior section (25) of said appendage (22) over the entire depth p of said hole (10).

11. The glazing (1) as claimed in any one of claims 4 to 10, **characterized in that** said front face (30) of said molding is substantially parallel to said rear face (21) of said attached component (2), at least at the periphery of the hole (10).

12. The glazing (1) as claimed in any one of claims 4 to 11, **characterized in that** said rear face (31) of said molding or of said glazing at the location of the hole (10) is perpendicular to the axis of the hole, or even to the axis of the appendage.

13. The glazing (1) as claimed in any one of claims 4 to 12, **characterized in that** said attached component (2) has an elongate shape and for preference said appendage (22) has an elongate section extending in the elongate direction of said attached component.

14. The glazing (1) as claimed in any one of claims 4 to 13, **characterized in that** the distal end (13) of the hole (10) comprises, over at least part of its periphery, a boss (37) projecting with respect to the rear face (31) of said glazing or of said molding at the periphery of the hole (10).

15. The glazing (1) as claimed in any one of claims 4 to 14, **characterized in that** the distal end (13) of the hole (10) comprises, over at least part of its periphery, a depression (38) set back from the rear face (31) of said glazing or of said molding at the periphery of the hole (10).
